# EUROPEAN PATENT APPLICATION

(11) **EP 3 239 536 A1**
(43) Date of publication of application: **01.11.2017**
(21) Application number: 16166885.0
(22) Date of filing: 25.04.2016
(51) Int. Cl.: F16B 7/04, F16B 21/02, F16B 12/40, F16B 12/34, F16B 12/32, F16B 12/42, F16B 12/20

(54) **FURNITURE LOCK ASSEMBLY**

(71) Applicant: KIH-utveckling AB, 554 39 Jönköping (SE)
(72) Inventor: Hjelm, Johan, 564 36 Bankeryd (SE)
(74) Representative: Awapatent AB

(57) **Abstract**

The present invention relates to a furniture lock assembly (1) for attaching a first furniture bar member (10) to a second furniture bar member (20) in a furniture arrangement (100), wherein the lock assembly comprises a hollow first furniture bar member (10), a pin (30) attachable to an outer surface of a second furniture bar member, the pin having a neck portion (32) and a head portion (35), the head portion being wider than the neck portion, a cam unit configured to be arranged inside the hollow first furniture bar member, wherein the cam unit comprises a tubular socket (40) attached to a base member (42), and a cam cylinder (50) arranged rotatably in the tubular socket. The cam cylinder comprises a radial opening (52) configured to receive the head portion of the pin, and a circumferential groove (54) extending from said opening and along a part of the circumference of the cam cylinder, wherein the width of the groove corresponds to the width of the neck portion of the pin.

## Description

### Technical Field

The present disclosure relates to a furniture lock assembly, and especially to a furniture lock assembly for attaching two furniture bar members to each other.

### Background

In some furniture configurations, such as in tables or desks, horizontal or vertical bars are attached to each other to provide stable constructions. It is mostly not desirable to weld the bars directly to each other due to transportation issues. It is also not desirable to weld the bars directly to each other for ease of reconfiguration without altering at least one of the bars. Instead some kind of attachment arrangement is provided between the two bars.

In one known solution, a threaded nut member such as a hole is provided on a first bar, and the second bar is provided with a screw extending through the second bar's longitudinal end portion to engage with the nut member and thereby fix the second bar member to the first bar member. The second bar member is provided with an opening on a longitudinal side portion to enable a user to access the screw. However, the screw access is very limited, making it a complicated procedure to rotate the screw to engage it with the nut member.

Consequently, an alternative solution is desired, facilitating the attachment of the two bars to each other.

### Summary

It is an objective of the present invention to provide an improved solution that alleviates the mentioned drawbacks with present devices. Furthermore, it is an objective to provide a lock assembly for furniture bar members that is secure and facilitates the attachment of the furniture bar members to each other in multiple configurations.

This is provided in a first aspect of the invention by a furniture lock assembly for attaching a first furniture bar member to a second furniture bar member in a furniture arrangement, wherein the lock assembly comprises a pin unit attachable to an outer surface of a second furniture bar member, the pin unit comprising a pin having a neck portion and a head portion, the head portion being wider than the neck portion, a cam unit configured to be arranged inside a hollow first furniture bar member, wherein the cam unit comprises a tubular socket configured to be attached to an inner side of a hollow first furniture bar member, and a cam cylinder arranged rotatably in the tubular socket. The cam cylinder comprises a radial opening configured to receive the head portion of the pin, and a circumferential groove extending from said opening and along a part of the circumference of the cam cylinder, wherein the width of the groove corresponds to the width of the neck portion of the pin.

The radial opening of the cam cylinder may correspond in width with the head portion, meaning that the opening is wide enough for the head portion to pass through. By the groove having a width corresponding to the width of the neck portion it may be meant that the groove at least partly may have a width through which the neck portion may extend, but through which the head portion cannot extend.

By providing the cam cylinder inside a socket, the cam unit may be suitably arranged inside the hollow bar member. The pin head portion may be spherical shaped, cone shaped, cylindrical shaped, truncated spherical or cone shape or the like. The radial width of the head portion may in some way be larger than the corresponding width of the neck portion. The head portion may be received inside the cam cylinder through the opening in the cam cylinder. Inside the opening there may be a hollow interior for receiving the head portion. The groove may extend radially from the hollow interior along a portion of the circumference of the cam cylinder. Preferably the opening and the groove may together extend along about 90 degrees of the circumference of the cam cylinder. When the cam cylinder is rotated inside the socket and the head portion is located within the cam cylinder, the groove may embrace the neck portion. Since the width of the neck portion and the groove is smaller than the width of the head portion, the pin may be locked to the cam unit and the first bar member.

The lock assembly according to the present invention may enable a user to lock two bar members to each other without the complicated operation as in previous solutions. The rotation of the cam cylinder may be accessible from outside the first bar member, thereby facilitating the attachment operation of the two bar members.

The pin unit may be attached to an outside of a second bar member. The pin unit may be attached in different ways, such as welded or using fastenings means such as screws or rivets.

The furniture lock assembly may be configured for attachment to a second furniture bar member constituted by a leg member or horizontal bar member of a table or desk.

In one embodiment, the height of the tubular socket may correspond to the interior height of the first furniture bar member. By the height of the tubular socket corresponding to the interior height of the hollow first furniture bar member it may be meant that the height of the socket and bar member together is similar to the interior height of the first bar member in an extent to prevent unintentional movement of the cam unit inside the first bar member, and to provide a stable and rigid arrangement of the cam unit inside the first bar member.

In one embodiment, the groove may taper along its extension away from the opening in the cam cylinder. The groove may thereby close to the opening have a width somewhat larger than neck portion and taper in the direction away from the opening in order to more and more tight embrace and lock to the neck portion. The groove may at its end have a width smaller than the width of the neck portion. When rotating the cam cylinder, the groove may thereby at a point lock to the neck portion by friction. In one embodiment, the groove may at its start at the opening have a width corresponding to the width of the opening, and then taper along its extension away from the opening.

In another embodiment, the pin unit may comprise a foot portion attachable to an outer surface of the second furniture bar member, wherein the foot portion may comprise a threaded projecting rod and the neck portion of the pin may comprise a threaded interior opening configured to be arranged in threaded engagement with said rod. When the foot portion has been arranged on a second bar member, the neck portion may be arranged on the foot portion by screwing it onto the rod. The dimensions of the foot portion and/or the neck and head portions may differ in different applications. When having the foot portion and the neck and head portions as two separate entities, a system may be provided which more easily may be adapted for a specific application. For instance, the same neck and head portion may be used in combination with different foot portions adapted for attachment for a certain type of second bar member. Further, the manufacturing of the pin in sections for threaded engagement to each other may provide a strong and reliable construction of the pin.

In a further embodiment, the cam cylinder may comprise a nut portion at a longitudinal end for rotational operation of the cam cylinder. The nut portion may be easily accessible by a user assembling the lock assembly. The nut member may comprise hexagonal nut, a square nut, a hexagonal socket head, a square socket head or other types of nuts or socket heads.

In one embodiment, the cam cylinder may be accessible from outside the first furniture bar member, when arranged in the tubular socket, through an opening in a side surface of the first furniture bar member. The side surface of the first bar member may be any longitudinally extending sides of the first bar member. The opening in the first bar member may provide access to the nut member of the cam cylinder. A user may thereby operate the rotation of the cam cylinder using a suitable tool for the nut member. Such operation may be made directly at an outer surface of the first bar member.

In another embodiment, the pin unit may comprise a foot portion attachable to an outer surface of the second furniture bar member, wherein the foot portion comprises a plate attachable to the outer surface of the second furniture bar member, and wherein the shape dimensions of the plate corresponds to an interior shape dimension of the first furniture bar member. When the shape dimensions of the plate corresponds to the interior shape dimension of the first bar member, the longitudinal end of the first bar member, upon attachment of the first bar member to a second bar member, may embrace the plate. The longitudinal end of the first bar member may be open. The longitudinal end of the first bar member may abut an outer surface of the second bar member and at the same time surround the plate. This may provide a more stable connection between the first and the second bar member when the first bar member has been attached to the second bar member. An unintentional rotation of the first bar member around its longitudinal axis may thereby be prevented, providing a more secure attachment. The shape dimensions of the plate and the first bar member interior may be width and height of the plate and interior if being rectangular or square formed. The shape dimensions may further be dimensions of a round, oval, hexagonal or such shape. By shape dimensions it may be meant the maximum e.g. width and height, i.e. the dimensions defining the overall size and shape of the plate.

In a further embodiment, the plate may be substantially rectangular and the neck portion of the pin may extend from the plate at a width wise and/or height wise centre location of the plate. The pin may extend from the plate at a centre point of the plate. The attachment of the first bar member to the second bar member with the first bar member enclosing the plate may thereby be rigid and stable.

In one embodiment, the tubular socket may comprise a base member that may be configured to be attached to an inner side of a hollow first bar member and may have a width that corresponds to an interior width of the hollow first furniture bar member. The base member may further be fixed to the interior of the first bar member. When the width of the base member corresponds to the interior width of the first bar member, the base member may be prevented from rotation relative to the first bar member. Due to the socket's attachment to the base member, the socket is also prevented from rotation relative to the first bar member. A secure arrangement of the cam unit that prevents failure of the lock assembly may thereby be prevented.

In another embodiment, the plate may comprise a threaded hole with which the rod may be in threaded engagement such that the rod and the neck portion are attached to the plate. When the plate has been attached to a second bar member, the threaded rod may be arranged in the threaded hole. The neck portion may thereafter be screwed onto the rod to provide the pin attachment to the second bar member. A facilitated mounting of the pin and its parts to the second bar member is thereby provided. A user assembling the lock assembly may use the parts of the lock assembly and easily mount it and thereby securely attach the first bar member to the second bar member.

In an alternative embodiment, the pin neck portion may be provided with an integrated threaded projecting rod extending towards the plate to be arranged in threaded connection with the threaded hole of the plate. This may then replace the separate threaded rod and the threaded interior of the neck portion.

In one embodiment, the tubular socket may comprise a radial opening configured to receive the pin. The pin thereby may extend through the opening in the socket to reach the opening in the cam cylinder.

In one embodiment, the head portion and the neck portion may be configured for threaded attachment to each other. The neck portion and the head portion may thereby be two separate parts. The neck portion may be provided with a threaded pin end towards the head portion. The head portion may correspondingly be provided with a threaded nut portion for threaded engagement with the threaded pin end of the neck portion. Alternatively, it may be the opposite, i.e. that the neck portion is provided with a threaded nut portion and the head portion with a threaded pin end. In such embodiment, the neck portion may be formed in one part with the foot portion of the pin, or be configured for a threaded engagement with the foot portion as described above. A head portion separate from the neck portion, and for threaded engagement thereto, may be advantageous for manufacturing reasons of the lock assembly. The pin provided in section for threaded engagement to each other may provide a strong and reliable construction of the pin. Further, a standard sized head portion may be used with neck portions of different sizes, providing a system comprising differently sized neck portions, all combinable with the head portion through threaded engagement.

In an alternative embodiment, the pin comprising the foot portion, the neck portion and the head portion may all be formed in one piece, e.g. moulded as one unit. This may facilitate the manufacturing of the pin as long as the resulting pin provides sufficient strength.

In one embodiment, the lock assembly may further comprise a positioning function for holding the cam cylinder in a certain position relative to the tubular socket. A positioning function may be used for keeping or releasably fixing the cam cylinder in a certain position relative to the socket. There may for instance be two positions in which the cam cylinder may be held by the positioning function. An open position in which the pin may be insertable through the opening in the cam cylinder, and a locked position in which the cam cylinder has been rotated to lock the pin to the cam cylinder and socket.

In a further embodiment, the positioning function may be constituted by the tubular socket comprising at least two recesses and the cam cylinder comprising a projection, wherein the recesses may be configured to receive the projection at different positions of the cam cylinder relative to the tubular socket to hold the cam cylinder in the respective position.

The recesses may be located along a section of the circumference of the socket, for instance along a section corresponding to extension of the opening and groove along the circumference of the cam cylinder. The recesses are configured to receive the projection on the cam cylinder. When the projection is received in a recess, the cam cylinder is temporarily prevented from rotation relative to the socket, at least prevented from unintentional rotation of the cam cylinder. By intentionally rotating the cam cylinder, the holding force of the recess to the projection may be overcome such that the cam cylinder may be rotated. The locations of the recesses may correspond to the open and locked positions of the cam cylinder. There may also be intermediate positions and recesses between those two.

According to a second aspect of the invention, a furniture arrangement is provided, comprising a hollow first furniture bar member, a second furniture bar member and a furniture lock assembly according to any of the above.

In one embodiment, the furniture arrangement may be a height-adjustable furniture arrangement comprising a telescopic leg member, wherein the telescopic leg member may constitute the second bar member. In such embodiment, the first bar member may be a horizontal bar member of the furniture.

The height-adjustable furniture may for instance be a table or a desk. The telescopic leg of the furniture may form the second furniture bar member and be attached to the first furniture bar member. The pin of the lock assembly may be attached to an outside surface of the telescopic leg. The pin may be attached by welding or using fastening means such as screws or rivets.

### Brief Description of the Drawings

The invention will in the following be described in more detail with reference to the enclosed drawings, wherein:
Fig 1 a shows a perspective view of a furniture arrangement according to an embodiment of the invention.
Fig 1b shows a perspective view of a furniture arrangement according to an embodiment of the invention.
Fig. 2 shows a cross-sectional side view of a furniture lock assembly according to an embodiment of the invention.
Fig. 3 shows a cross-sectional side view of a furniture lock assembly according to an embodiment of the invention.
Fig. 4 shows a perspective view of a furniture lock assembly according to an embodiment of the invention.
Fig. 5 shows a perspective view of a furniture lock assembly according to an embodiment of the invention.
Fig. 6 shows a perspective view of a furniture lock assembly according to an embodiment of the invention.
Fig. 7 shows a cross-sectional side view of a furniture lock assembly according to an embodiment of the invention.
Fig. 8 shows a cross-sectional side view of a furniture lock assembly according to an embodiment of the invention.
Fig. 9 shows a cross-sectional top view of a furniture lock assembly according to an embodiment of the invention.

### Description of Embodiments

The present invention will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements.

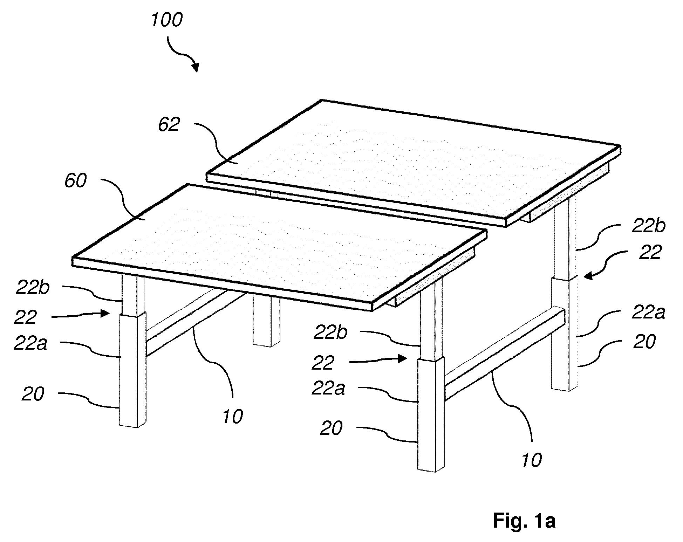

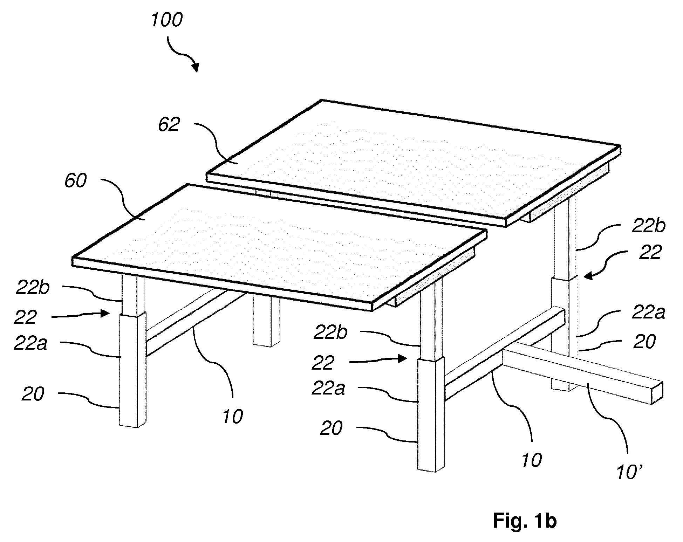

Fig. 1 a illustrates a desk arrangement 100 in which a lock assembly 1 according to an embodiment of the invention may be used. The desk arrangement 100 comprises two individually height adjustable desktops 60, 62. The frame of the desk arrangement 100 comprises four telescopic legs 22. Each leg 22 comprises an outer leg member 22a and an inner leg member 22b arranged for telescopic movement relative to each other. The outer leg member 22a corresponds in the desk arrangement 100 to a second bar member 20 as described below.

The four legs 22 are connected to each other in pairs by a bar member 10. The bar member 10 is attached to one leg 22 at each respective longitudinal end of the bar member 10. Such bench solution in the desk arrangement 100 provides that only four legs 22 are needed for two separate desktops, and without the need of any large foot on each leg. Using the lock assembly 1 according to the present invention in such bench solution facilitates the mounting of the bar member 10 to the legs 22 to assemble the bench desk.

Fig. 1b illustrates a desk arrangement 100 exemplifying how the lock assembly 1 may further be used by locking an additional bar member 10' to a horizontal bar member 10. The desk arrangement 100 may thereby be coupled to further desk arrangements via the bar member 10'. A lock assembly 1 is then arranged inside the additional bar member 10' acting as first bar member, and attached to the bar member 10.

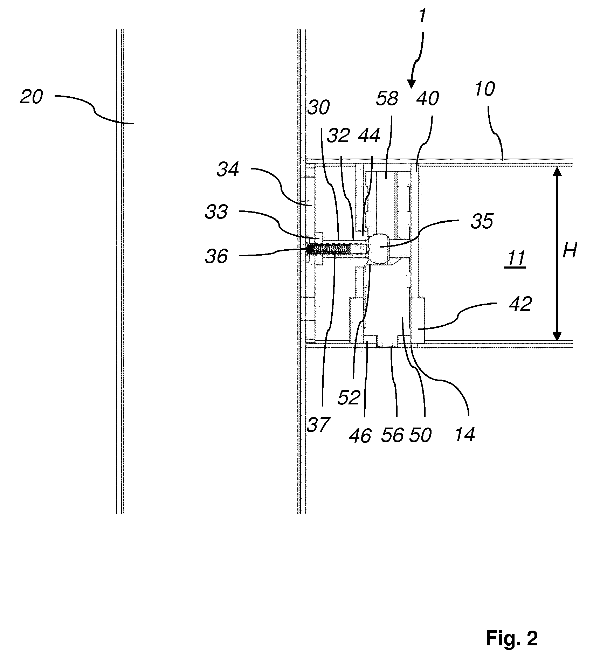

In fig. 2 the lock assembly 1 for attaching a first bar member 10 to a second bar member 20 is illustrated. The second bar member 20 may be a vertically extending leg part 22a as in the desk arrangement 100.

The first bar member 10 is a hollow bar member, preferably a hollow steel bar with a rectangular cross section. The first bar member 10 is open at its longitudinal ends. The first bar member 10 has an interior height H.

Inside the first bar member 10 a cam unit is arranged which comprises a tubular socket 40 and a cam cylinder 50 arranged inside the socket 40. The cam cylinder 50 is rotatable relative to the tubular socket 40. The tubular socket 40 comprises a base member 42.

On the second bar member 20 a pin unit comprising a pin 30 is arranged. The pin 30 comprises a neck portion 32 and a head portion 35. The head portion 35 is wider than the neck portion 32. The head portion 35 is here illustrated as a truncated spherical portion attached to the neck portion 32 of the pin 30.

The tubular socket 40 comprises a radial opening 44 at a longitudinally central section of the socket 40. The opening 44 is dimensioned to receive the head 35 of the pin 30. The cam cylinder 50 has a radial opening 52 configured to receive the head portion 35 of the pin 30. The opening 52 of the cam cylinder 50 is dimensioned so as to correspond to the width of the head portion 35, or to be slightly wider than the head portion 35. At the opening 52, the cam cylinder 50 is hollow so as to receive the head portion 35.

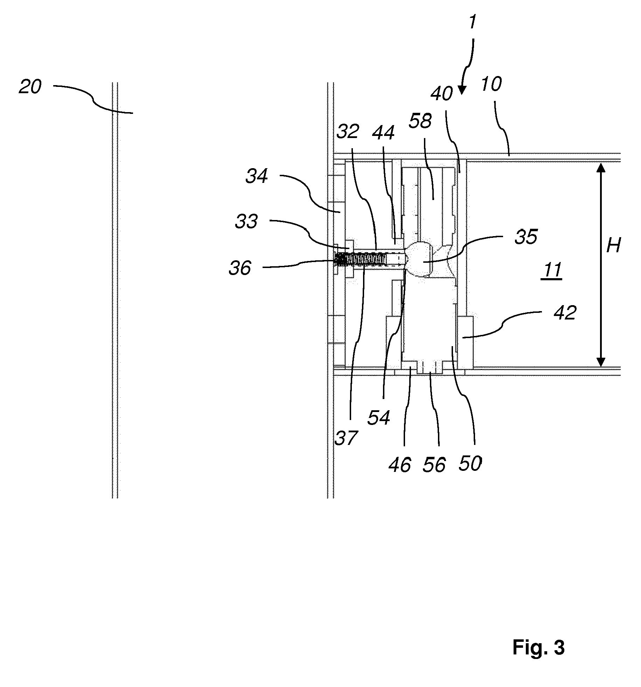

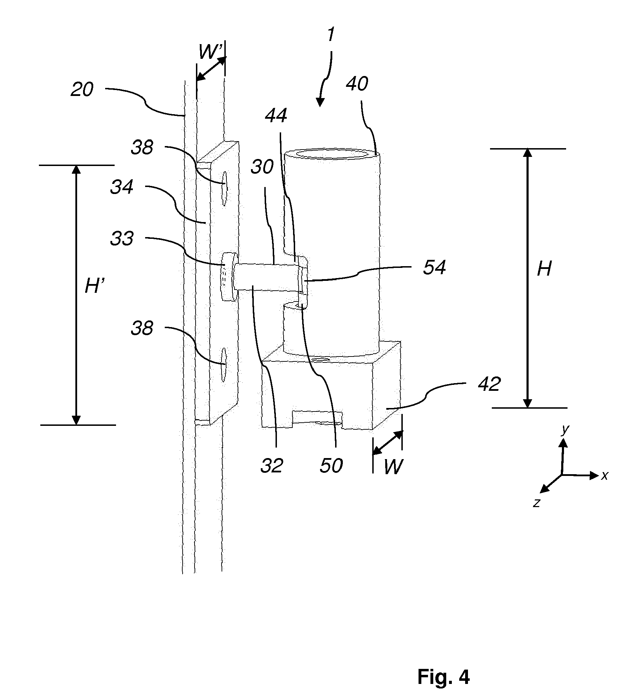

The cam cylinder 50 further comprises a circumferential groove 54 (see figs. 3 and 4). The circumferential groove 54 extends from the opening 52 in the cam cylinder 50 and along a section of the circumference of the cam cylinder 50. The groove 54 may for instance extend such that the groove 54 and the opening 52 together forms an open section along about 90 degrees of the circumference of the cam cylinder 50.

The width of the groove 54 is smaller than the width of the head portion 35 of the pin 30, but equal to or larger than the width of the neck portion 32 of the pin 30.

In fig. 2 the cam cylinder 50 is illustrated in an unlocked position, wherein the opening 52 of the cam cylinder 50 is directed towards the pin 30, at the location of the opening 44 in the socket 40. In fig. 3 the cam cylinder 50 has been rotated 90 degrees to a locked position. The pin 30 is thereby locked to the cam cylinder 50 by the groove 54 embracing the neck portion 32 of the pin 30. The head portion 35 is then prevented from being separated from the cam cylinder 50. In one embodiment, the groove 54 is tapering away from the opening 52. When rotating the cam cylinder 50, the groove 54 may then embrace and further clamp the neck portion 32 of the pin 30.

The rotation of the cam cylinder 50 is controlled via a nut member 56 at a longitudinal end of the cam cylinder 50. At the location of the nut member 56 the first bar member 10 comprises an opening 14. The nut member 56 is thereby accessible from outside the first bar member 10. The nut member 56 may comprise a hexagonal nut, a square nut, a hexagonal socket head, a square socket head or the like.

The base member 42 is attached to an inner side of the first bar member 10. The base member 42 may for instance be attached by fastening means such as screws arranged through screw holes 12 in the first bar member 10.

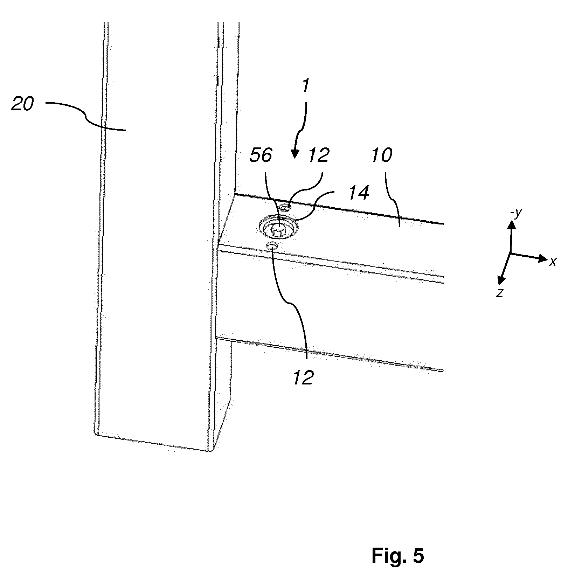

The lock assembly 1 according to the present invention may be used in first bar members 10 of different dimensions. The tubular socket 40 is designed to be tubular to provide the locking function together with the cam cylinder 50 arranged therein, irrespective of the inner dimensions of the first bar member 10. In order to provide a rigid arrangement of the cam unit inside the first bar member 10, a base member 42 of the socket 40 may be selected that corresponds to the inner width dimension of the first bar member 10. The width of the first bar member 10 being along the axis z as illustrated in figs. 4 and 5. The socket 40 is thereby prevented from rotation relative to the first bar member 10.

The tubular socket 40 is fixedly attached to the base member 42, for instance by welding, or from being formed in one part. Further, the tubular socket 40 has, in this embodiment, a height corresponding to the inner height H of the first bar member 10. The heights are defined along the axis y as illustrated in figs. 4 and 5. The socket 40 thereby provides a rigid attachment of the cam unit in the first bar member 10, and enables the cam unit to lock the hollow first bar member to the second bar member 20.

The pin 30 comprises a foot portion 33 configured to be attached to the second bar member 20. In the illustrated embodiment, the foot portion 33 comprises an extended plate 34 attached to the second bar member 20. The extended plate 34 has width and height dimensions corresponding to the inner width and height of the first bar member 10. When the first bar member 10 is attached to the second bar member 20 by means of the lock assembly 1, the longitudinal end of the first bar member 10 facing the second bar member 20 embraces the plate 34. This provides a further stabilized attachment of the two bar members 10, 20 to each other.

The foot portion 33 may be welded to the second bar member 20, or attached by means of fastening means such as screws 38 (see fig. 4). When the second bar member 20 is an outer leg member 22a in a telescopic leg 22 as illustrated in fig. 1, the fastening of the foot portion 33 of the pin 30 to the outer leg member 22a is provided such that any fastening means does not extend into the interior of the outer leg member 22a such that it interfere with the telescopic function of the leg 22. I.e. that it does not prevent an inner leg member 22b to extend into the outer leg member 22a. This may be provided by fastening means not extending into the interior of the second bar member 20, by fastening means extending into the interior of the second bar member 20 only in such small extent that it does not interfere with the telescopic function, or by welding the foot portion 33 to the outer surface of the second bar member 20.

The neck and head portions 32, 35 of the pin 30 may be attached to the foot portion 33 through threaded engagement. The foot portion 33 then comprises a threaded rod 36 extending in a direction towards the interior of the first bar member 10. The neck portion 32 is hollow with a threaded interior 37 for threaded engagement with the threaded rod 36. By having a design of the pin 30 comprising separate parts for the foot portion 33 and the neck and head portions 32, 35, less parts need to be replaced when manufacturing the lock assembly for first bar members of different dimensions. The rod 36 may be attached to the foot portion 33 by being in threaded engagement with a threaded hole in the plate 34.

In the illustrated embodiment in figs. 2 and 3, the cam cylinder 50 further comprises an axial groove 58. The axial groove 58 extends from the opening 52 in the cam cylinder 50 towards a longitudinal end of the cam cylinder 50, i.e. along axis y as illustrated in fig. 5. The axial groove 58 provides that the cam cylinder 50 may be inserted into the socket 40 after the first bar member 10 has been arranged such that the pin 30 extends into the socket 40. When the cam cylinder 50 then is inserted into the socket 40 through the bottom opening 46 of the socket 40, the axial groove 58 embraces the pin 30 along the insertion until the cam cylinder 50 is in place and the pin 30 extends through the opening 52.

Fig. 4 illustrates the lock assembly 1 attached to the second bar member 20, but with the first bar member 10 removed. Inside the tubular socket 40 the cam cylinder 50 is arranged. The pin 30 extends from the second bar member 20 into the cam cylinder 50. The cam cylinder 50 has been rotated to the locking position providing the groove 54 to embrace the neck portion 32 of the pin 30. Along its extension towards the cam cylinder 50, the pin 30 extends through the opening 44 in the socket 40.

The base member 42 of the socket 40 has a width W that in one embodiment corresponds to an internal width of the first bar member 10. The socket 40 is non-rotatably arranged inside the hollow first bar member 10.

The socket 40 has a height H that in this embodiment corresponds to the internal height H of the hollow first bar member 10. A secure installation of the cam unit inside the hollow first bar member 10 is thereby provided.

The plate 34 of the foot portion 33 of the pin 30 is attached to the second bar member 20. The plate 34 has the width W' and the height H' corresponding to the internal width W and height H of the hollow first bar member 10. The width W may further be equal to the width of the base member 42.

Fig. 5 illustrates the first bar member 10 attached to the second bar member 20 by means of the lock assembly arranged inside the first bar member 10. The nut member 56 for rotation of the cam cylinder 50 is accessible through the opening 14 in the first bar member 10. The screw holes 12 in the first bar member 10 is used for attachment of the base member 42 to the first bar member 10.

The first bar member 10 may be a horizontally extending bar in a furniture arrangement attached to vertically or horizontally extending second bar member 20. The first bar member 10 could also be vertically extending in the furniture arrangement.

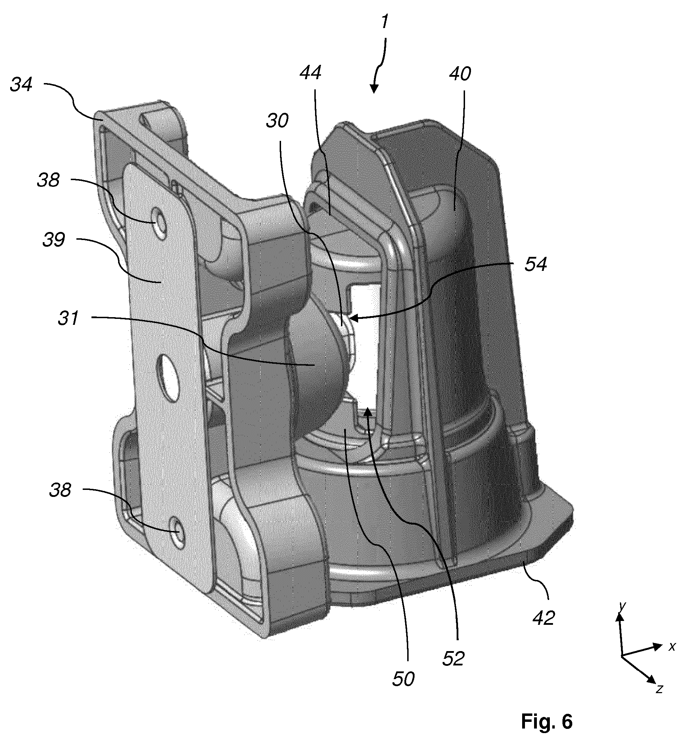

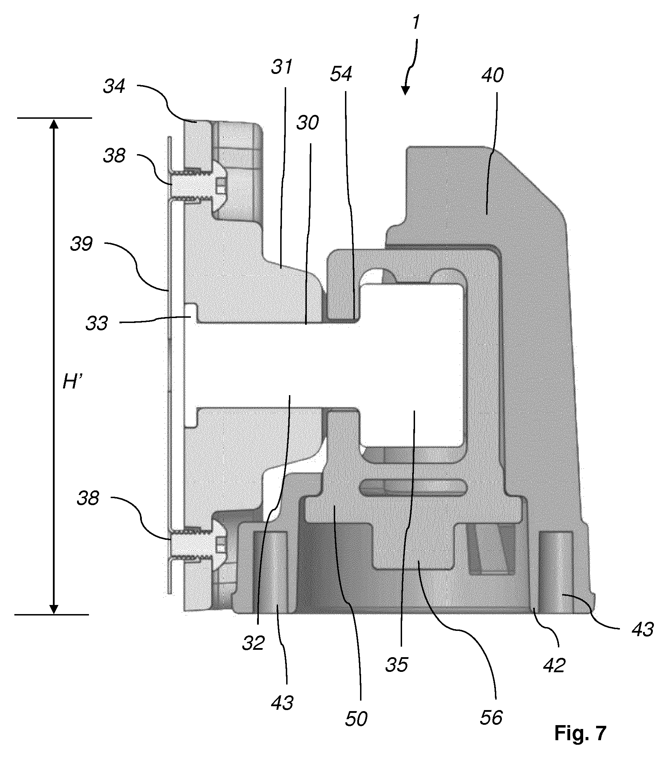

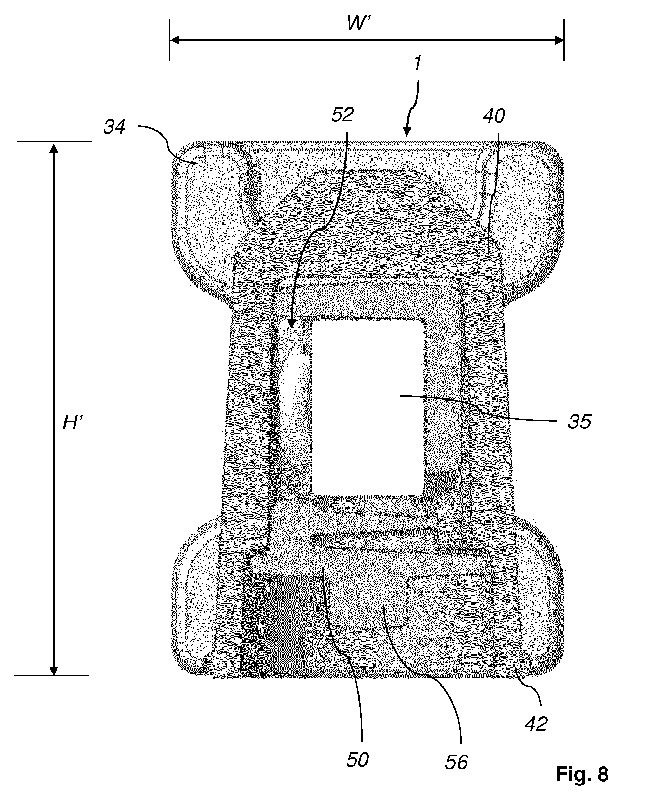

Figs. 6-9 illustrate an embodiment of the invention wherein the cam unit and the pin unit have different shapes. The socket 40 comprises the base member 42. The base member 42 is configured for attachment to an inner side of a hollow first bar member 10. Inside the socket 40 is the cam cylinder 50 arranged. The cam cylinder 50 comprises the opening 52 for receiving the head portion 35 of the pin 30, and a groove 54 extending along the circumference of the socket 50. The groove 54 is configured to embrace the neck portion 32 of the pin 30. The socket 40 has an opening 44 for enabling the pin 30 to reach the cam cylinder 50.

The plate 34 is configured to have outer dimensions corresponding to inner dimensions of the hollow first bar member 10. Even though the plate 34 in the illustrated embodiment is not rectangular, its shape and dimensions of the corners makes it suitable to fit into and be embraced by a rectangular shaped hollow first bar member 10. I.e. the shape dimensions of the plate 34 provides a height H' and a width W' corresponding to the internal height H and width W of the first bar member 10. This provides an embracement of the plate 34 by the first bar member 10 when the first bar member 10 is attached to the lock assembly and a second bar member 20. By shape dimensions it may be meant the maximum e.g. width and height, i.e. the dimensions defining the overall size and shape of the plate. As in the illustrated example wherein the plate is formed as a non-continuous rectangle shape, but having a width W' and height H' providing a rectangular shape dimension. In alternative embodiments, the plate may have a round, oval, hexagonal or similar shape dimension, corresponding to an inner shape of a first bar member to be attached thereto.

The pin unit comprises a collar 31 extending around the neck portion 32 of the pin 30. The collar 31 provides support to the pin 30. The collar may extend into the hollow first bar member 10 when the lock assembly 1 is arranged to the first bar member 10.

The pin unit comprises a fastening plate 39 for attachment to a second bar member 20. The pin unit foot portion 33 and/or the plate 34 is attached to the second bar member 20 via the fastening plate 39. In such embodiment, fastening means 38 may be used on the fastening plate 39 instead of the plate 34, or used on both the fastening plate 39 and the plate 34.

The height of the socket 40 is not necessarily corresponding to the inner height of the hollow first bar member 10. The socket 40 and base member 42 is attached to the inner side of the first bar member 10 by fastening means, such as screws attached to screw holes 43 in the base member 42.

The cam cylinder 50 is rotatable inside the socket 40. The cam cylinder 50 comprises the nut member 56 configured for providing rotation access of the cam cylinder 50 to a user. When the pin head portion 35 is inserted into the cam cylinder 50 via the opening 52, the cam cylinder 50 can be rotated relative to the socket and the first bar member 10 by means of the nut member 56. The cam cylinder 50 is the rotated such that the groove 54 moves to embrace the neck portion 32 of the pin 30. The pin 30 is thereby locked to the cam cylinder 50 and thereby also to the socket 40 and the first bar member 10. Figs. 6-9 illustrate the lock assembly 1 in a state wherein the cam cylinder 50 has been rotated to lock the pin 30.

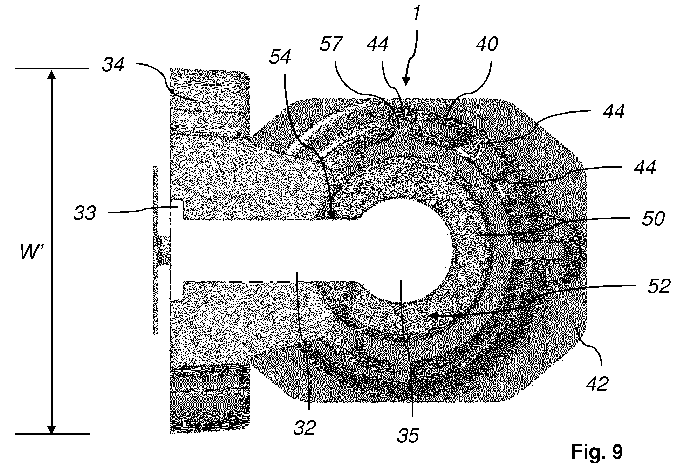

As illustrated in fig. 9, the lock assembly 1 in one embodiment comprises a positioning function by which the position of the cam cylinder 50 relative to the socket 40 is secured. The socket 40 comprises at least two recesses 44 for receiving a projection 57 on the cam cylinder 50. The recesses 44 are located to correspond to the cam cylinder 50 being in an open position, i.e. when the opening 52 is directed towards the pin 30 to receive the pin 30 inside the cam cylinder 50, and in a locked position, i.e. when the cam cylinder 50 has been rotated to lock the pin 30 to the cam cylinder 50 and to the first bar member 10. Fig. 9 illustrates the cam cylinder 50 in the locked position. There may be more than two recesses, for instance three as illustrated in fig. 9, wherein recesses between the two recesses that corresponds to open and locked position of the cam cylinder 50 provide intermediate positions along the rotation of the cam cylinder 50 between the open position and the locked position.

In the drawings and specification, there have been disclosed preferred embodiments and examples of the invention and, although specific terms are employed, they are used in a generic and descriptive sense only and not for the purpose of limitation, the scope of the invention being set forth in the following claims.

## Claims

1. A furniture lock assembly (1) for attaching a hollow first furniture bar member (10) to a second furniture bar member (20), wherein the lock assembly comprises,
a pin unit attachable to an outer surface of a second furniture bar member (20), the pin unit comprising a pin (30) having a neck portion (32) and a head portion (35), the head portion being wider than the neck portion,
a cam unit configured to be arranged inside a hollow first furniture bar member (10), wherein the cam unit comprises a tubular socket (40) configured to be attached to an inner side of a hollow first furniture bar member and a cam cylinder (50) arranged rotatably in the tubular socket,
wherein the cam cylinder (50) comprises a radial opening (52) configured to receive the head portion (35) of the pin, and a circumferential groove (54) extending from said opening and along a part of the circumference of the cam cylinder (50), wherein the width of the groove (54) corresponds to the width of the neck portion (32) of the pin.

2. Furniture lock assembly according to claim 1, wherein the height (H) of the tubular socket (40) corresponds to the interior height (H) of the hollow first furniture bar member (10).

3. Furniture lock assembly according to claim 1 or 2, wherein the pin unit comprises a foot portion (33) attachable to an outer surface of the second furniture bar member (20), wherein the foot portion comprises a threaded projecting rod (36) and the neck portion (32) of the pin (30) comprises a threaded interior opening (37) configured to be arranged in threaded engagement with said rod.

4. Furniture lock assembly according to any of the preceding claims, wherein the groove (54) tapers along its extension away from the opening (52).

5. Furniture lock assembly according to any of the preceding claims, wherein the cam cylinder (50) comprises a nut portion (56) at a longitudinal end for rotational operation of the cam cylinder.

6. Furniture lock assembly according to any of the preceding claims, wherein the pin unit comprises a collar portion (35) configured to extend into the hollow first bar member (10) to which the lock assembly is arranged, and to enclose at least a portion of the neck portion (32) of the pin (30).

7. Furniture lock assembly according to any of the preceding claims, wherein the pin unit comprises a foot portion (33) attachable to an outer surface of the second furniture bar member (20), wherein the foot portion comprises a plate (34) attachable to the outer surface of the second furniture bar member, and wherein the shape dimensions of the plate (34) corresponds to an interior (11) shape dimension of the first furniture bar member (10).

8. Furniture lock assembly according to claim 7, wherein the plate (34) is substantially rectangular and wherein the neck portion (32) of the pin (30) extends from the plate at a width wise and/or height wise centre location of the plate.

9. Furniture lock assembly according to any of the preceding claims, wherein the tubular socket (40) comprises a base member (42) configured to be attached to an inner side of a hollow first bar member (10) and having a width (W) that corresponds to an interior width of the hollow first furniture bar member (10).

10. Furniture lock assembly according claim 3 and 7, wherein the plate (34) comprises a threaded hole with which the rod (36) is in threaded engagement such that the rod and the neck portion (32) are attached to the plate.

11. Furniture lock assembly according to any of the preceding claims, wherein the head portion and the neck portion are configured for threaded attachment to each other.

12. Furniture lock assembly according to any of the preceding claims, further comprising a positioning function for holding the cam cylinder (50) in a certain position relative to the tubular socket (40).

13. Furniture lock assembly according to claim 12, wherein the positioning function is constituted by the tubular socket (40) comprising at least two recesses (44) and the cam cylinder (50) comprising a projection (57), wherein the recesses are configured to receive the projection at different positions of the cam cylinder relative to the tubular socket to hold the cam cylinder in the respective position.

14. Furniture arrangement comprising a hollow first furniture bar member (10), a second furniture bar member (20) and a furniture lock assembly according to any of the preceding claims.

15. Furniture arrangement (100) according to claim 14, wherein the furniture arrangement is a height-adjustable furniture arrangement comprising at least one telescopic leg (22), wherein the telescopic leg forms the second furniture bar member (20).
